# EUROPEAN PATENT SPECIFICATION

(11) **EP 1 895 833 B1**
(45) Date of publication and mention of the grant of the patent: **20.08.2008**
(21) Application number: 06762074.0
(22) Date of filing: 19.06.2006
(51) Int. Cl.: A01K 1/01

(54) **CAT TOILET**
KATZENTOILETTE
TOILETTES POUR CHAT

(30) Priority: 20.06.2005 DE 102005028389
(43) Date of publication of application: 12.03.2008
(73) Proprietor: MARS, INCORPORATED, McLean, Virginia 22101-3883 (US)
(72) Inventor: WENZEL, Gunnar, 27283 Verden (DE)
(74) Representative: Winkler, Andreas Fritz Ernst
(86) International application number: PCT/EP2006/005841
(87) International publication number: WO 2006/136348

(56) References cited:
- DE-C- 10 112 128
- US-A- 4 624 380
- US-A1- 2002 148 839

## Description

The present invention relates to a cat lavatory in which a pouch can be placed in a bottom part and the inserted pouch can be secured by placing a top part on top of it.

Cat lavatories of this kind are sufficiently known from the state of the art. DE 101 12 128 C1, for example, discloses a cat lavatory with a bottom part and a replaceable pouch which can be placed in the bottom part, the pouch comprising a non-woven insert. After use, the pouch can be sealed and disposed of simply in the household waste.

DE 36 225 28 C2 also discloses a cat lavatory consisting of a disposable soft pack made of a flexible material with a container space that is closed on all sides and holds a filling of hygienic litter, which can be exposed in order for the pack to be used, by tearing off the top side. After use, the cat lavatory consisting of a disposable soft pack can be disposed of in a sealed state.

DE 35 39 637 A1 discloses a cat lavatory with a bottom part and a replaceable bag filled with cat litter, which can be placed in the bottom part. The bag is designed such that the end portions of the bag can be folded over the upper peripheral edge of the cat lavatory and secured so that soiling of the lavatory container can be avoided.

US 3,771,493 discloses a cat lavatory comprising a container with a lining that can be placed in the container, in the form, for example, of a polyethylene film. Cat litter is poured into this lining and can then be removed from the container after use and disposed of, together with the lining. US-A1- 2002/0148839 discloses a tote box with corner enhancers and a top rail for holding the box walls together.

One fundamental problem connected with the cat lavatories known from the prior art is that, first of all, pouches of very varied dimensions are known, which a consumer has to place in one and the same bottom part. Secondly, bottom parts of very varied dimensions are also known. One consequence of this is that it is often difficult to place some unspecified pouch in the bottom part of a particular cat lavatory and that wrinkling can occur, especially in the edge and corner areas of the bottom part of the cat lavatory. A cat using the cat lavatory may trap its paw behind these folds and wrinkles, especially if it scratches, so that the cat can injure itself, or the cat lavatory itself might be damaged. A consequence of this kind of damage could be that cat litter might come into contact with the bottom part making it necessary to clean the cat lavatory thoroughly.

Furthermore, it is a frequent disadvantage of known cat lavatories that a frame fixed onto the bottom part of the cat lavatory does not completely hide the folded-over lateral edges of the pouch, which results in a visual or aesthetic impairment of the cat lavatory.

The object of the present invention is to overcome the disadvantages of the prior art, and in particular to provide a cat lavatory which enables a pouch to be placed in any cat lavatory bottom part, avoiding folds and wrinkles as far as possible. A further object is to hide the folded-over edge of the pouch as completely as possible once it has been placed in the bottom part.

In accordance with the invention, these objects are achieved by a cat lavatory comprising:
(i) a bottom part with a substantially rectangular floor space and, on each longitudinal and lateral edge of the floor space, a side wall projecting substantially upwardly in each case, wherein mutually adjacent side walls are joined together by means of an elastic mount, a pouch, preferably containing cat litter, which can be placed in the bottom part, and lateral edges of the pouch can be folded over the side walls of the bottom part, and
(ii) a frame-like top part which can be placed on top of the side walls of the bottom part and is designed such that, when placed on the side walls of the bottom part, it expands them outwardly.

It has surprisingly been found in accordance with the invention that, thanks to the special flexible design of the bottom part of the cat lavatory of the invention, pouches of any dimensions can be placed in the bottom part in such a way that those pouches are considerably freer of folds and wrinkles, so that the disadvantages of the prior art described above are overcome. The advantages are achieved in particular by the fact that the side walls of the bottom part of the cat lavatory are substantially separate from one another, meaning that they do not form a fixed peripheral lateral edge which is joined together, but instead are merely held together by an elastic mount, which enables the individual side walls to be expanded outwardly when the frame-like top part is placed on top of them. In this way, the cat lavatory of the invention can be adapted to any pouch formats desired. The term "pouch", as used herein, is intended to encompass all the pouches known in the art which are suitable for placing in a cat lavatory. This definition also covers, for example, standard commercially available hygienic inserts for cat lavatories consisting of simple plastic films in the form of a "bin liner" adapted to the dimensions of the cat lavatory.

It is preferred for the elastic mount to be an elastic band, preferably a rubber ring. A rubber ring of this kind joins together two mutually adjacent side walls in each case, i.e. a longitudinal side wall and a transverse side wall.

Alternatively, it is preferred for the elastic mount to be an elastic corner joint, preferably a rubber corner.

It is likewise preferred for the elastic mount to be releasably secured to the side walls, preferably hooked in, clipped in or plugged on. To hook the elastic mount to each side wall, any hooking means at all may be used, with which persons skilled in the art will undoubtedly be familiar.

In addition to cat litter, the pouch which can be placed in the cat lavatory of the invention may likewise encompass a highly absorbent non-woven insert, such as one of the kind described in DE 101 12 128 C1.

It is most preferable that the frame-like top part has an upper bevelled inside edge, so that, when it is placed on the bottom part, the side walls of the bottom part can be spread outwards along the slope. The bevelled inside edge of the frame-like top part is designed in such a way that it forms a slightly smaller circumference for the frame-like top part compared to the circumference of the bottom part of the cat lavatory of the invention when it is not spread apart. Towards the upper end, the bevelled inside edge expands to the dimensions of the bottom part of the cat lavatory when it is spread fully apart. When the frame-like top part is placed on top or pressed down, the side walls of the bottom part of the cat lavatory of the invention are spread apart, and the pouch placed inside it is thus stretched tight inside the bottom part.

In one embodiment, it is preferably also provided that the frame-like top part has a circumferential outer edge which substantially completely hides the folded-out lateral edges of the pouch placed in the bottom part.

Finally, it is proposed in accordance with the invention that a splash guard frame, preferably comprising a roof-like covering, can be placed on top of the frame-like top part, preferably by being plugged to it. A splash guard frame of this kind comprises in particular higher side walls, which are intended to prevent the cat's excretions from spilling out when the cat lavatory of the invention is in use. The splash guard frame is, however, preferably designed such that one side wall thereof is lowered slightly in order to make it easier for a cat to enter the cat lavatory. In accordance with the invention, it may also be provided that a roof-like covering is placed on top of the splash guard frame in addition, resulting overall in a hood-like structure. This means that the cat lavatory of the invention can have a modular structure comprising a bottom part, a frame-like top part, a splash guard frame and a roof-like covering, which can be joined together by means of plug connections with which persons skilled in the art are familiar, such as pegs and holes.

This modular structure permits a large number of different designs for the cat lavatory, both with regard to a colour arrangement, i.e. using different colours for the bottom part, frame, splash guard frame or roof-like covering, and also with regard to the composition of the material; for example, the bottom part can be made of plastic, the frame-like top part of stainless steel, the splash guard of polymethyl methacrylate and the roof-like covering of polyethylene. A very wide range of forms are conceivable for each module.

It can likewise be provided that the individual modular parts are manufactured in such a way that they can be made available and sold in substantially flat form (folded up) and are only put into their final shape by the user, who needs to perform only a few simple movements. This applies in particular to the bottom part of the cat lavatory of the invention.

It is obvious that the lavatory of the invention can also be used for a wide range of other pets.

Other features and benefits of the invention will become apparent from the following detailed description, in which two embodiments of the cat lavatory of the invention are explained in detail with reference to drawings. There,
Figure 1 shows a schematic top view of a bottom part for one embodiment of the cat lavatory of the invention in the non-assembled state;
Figures 2(a) - 2(c) show the insertion of a pouch into an assembled bottom part in accordance with Figure 1;
Figures 3(a) - 3(c) show, in a cross-sectional detail, a frame-like top part being placed on top of a bottom part;
Figure 4 shows a top view of a bottom part for a cat lavatory of the invention with a pouch inserted, with and without the side walls of the bottom part spread apart; and
Figures 5(a) - 5(c) show the assembly of a bottom part for a second embodiment of the cat lavatory of the invention.

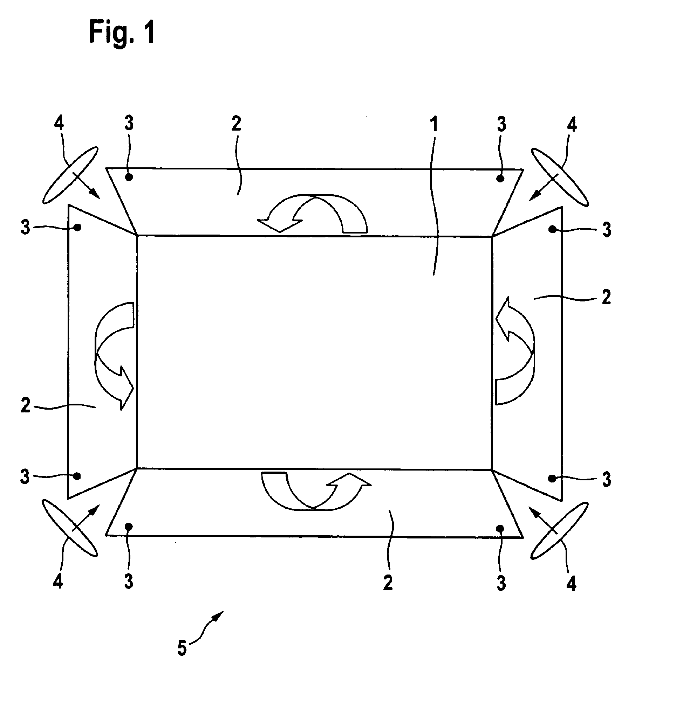

As has already been explained above, the individual modular elements of the cat lavatory of the invention can be offered in a folded-up state, which facilitates transport and storage in particular. Figure 1 shows a non-assembled bottom part 5 for a cat lavatory of the invention. Said bottom part 5 comprises a floor space 1 with side walls 2. In the upper corner portions of each side wall 2, fastening devices 3, such as hooks, are provided, to each of which an elastic mount 4 can be secured. Said elastic mount 4 is preferably a rubber ring in each case. In order to assemble the bottom part 5, the side walls 2 are folded upwards from the plane of the floor space 1 in the direction of the arrow, and mutually adjacent side walls 2 are joined together by means of a fastening device 3 on each side wall 2 via the flexible mount 4. The flexible mount 4 keeps the side walls 2 under tension and in a substantially vertical position when they have been joined together.

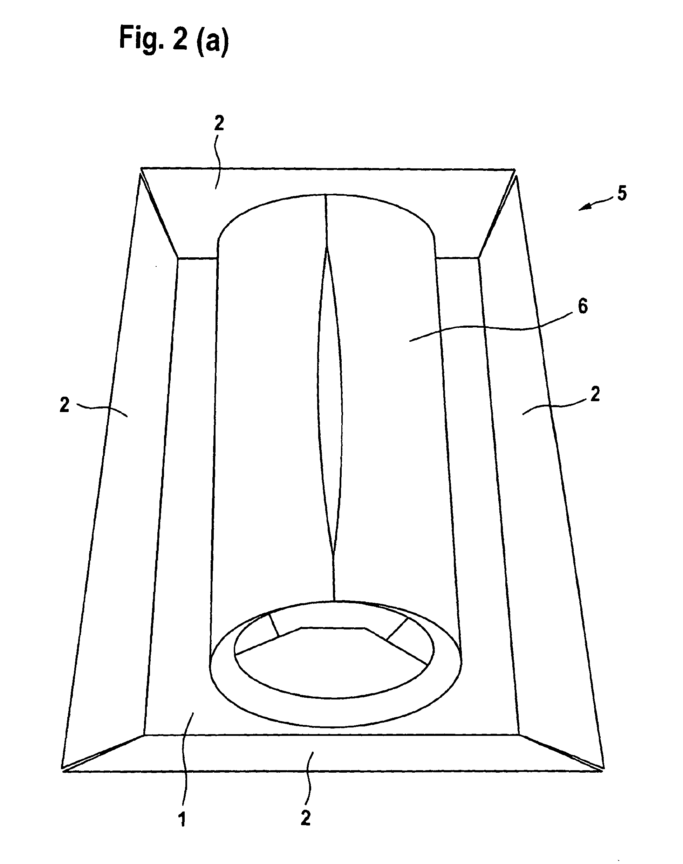

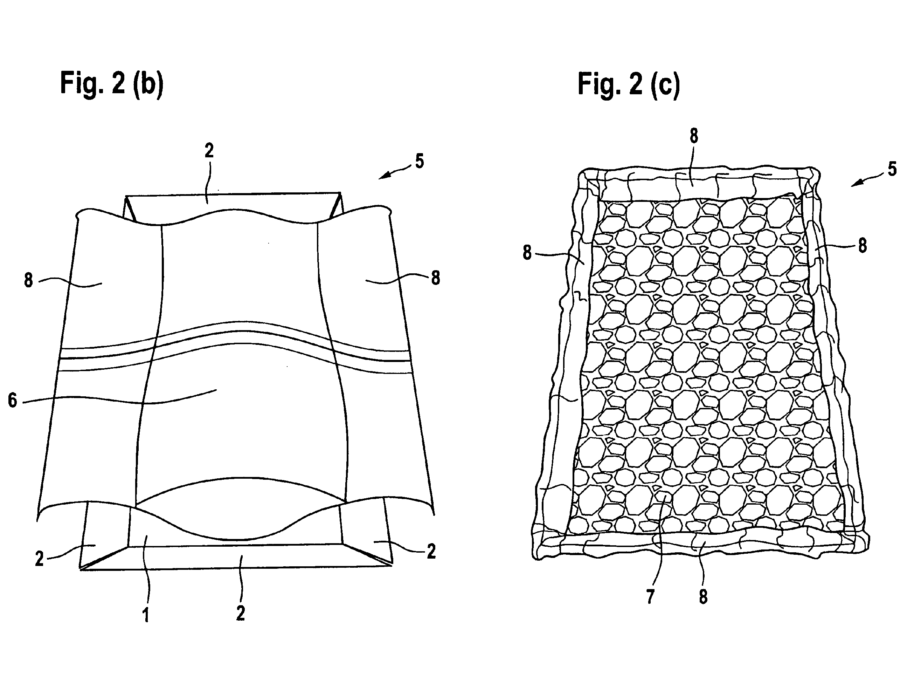

When a bottom part 5 of this kind has been assembled, it is simple to place a pouch 6 in it, as is shown in Figures 2(a) - 2(c). For this purpose, first of all the rolled-up pouch 6 is placed in the bottom part 5 (Fig. 2(a)), then unfolded and opened (Fig. 2(b)), so that the lateral edges 8 of the pouch 6 can be folded out and over the side walls 2 of the bottom part, and cat litter 7 contained in the pouch is revealed (Fig. 2(c)). As has already been explained above, it is possible for a highly absorbent non-woven insert (not shown) to be provided in particular underneath the cat litter 7.

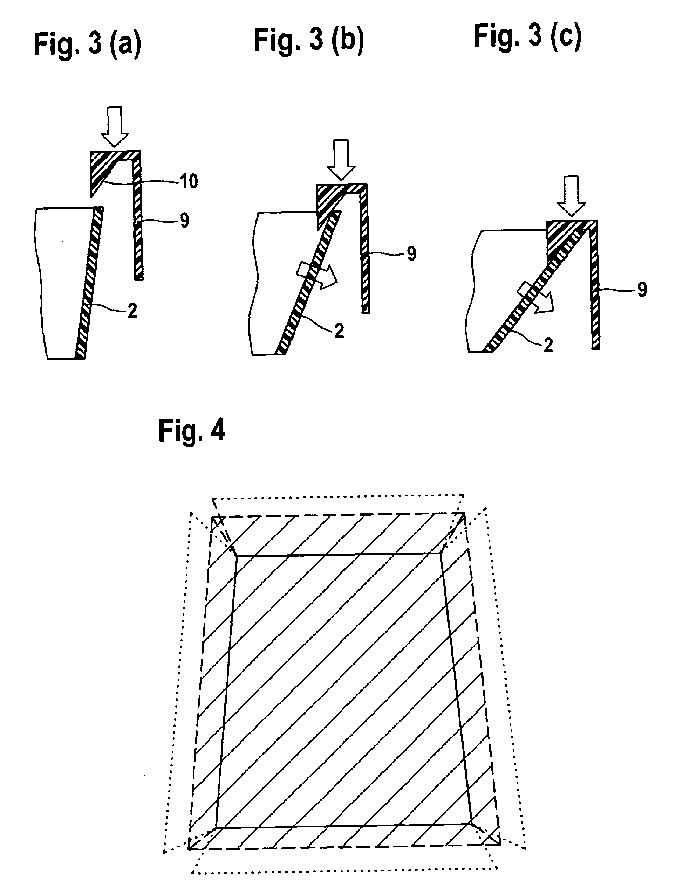

A frame-like top part 9 can then be placed on top of a bottom part 5 prepared with a pouch 6 in this way, as is shown schematically in a cross-sectional detail from a cat lavatory of the invention in Figure 3. The top part 9 has an upper bevelled inside edge 10, the lower end of said bevelled inside edge providing circumferential dimensions for the frame-like top part 9 which are somewhat smaller than the circumferential dimensions of the bottom part 5 with the side walls 2 not spread apart, as is shown in Figure 3(a). When the frame-like top part 9 is placed on top of the side wall 2, the side wall 2 slides along the slope of the inside edge 10 and is spread apart in this way, see Figure 3(b). When the frame-like top part 9 is resting completely on the side wall 2, the side wall 2 is spread very far apart, thus stretching tight the pouch 6 placed in the bottom part 5, so that a substantially wrinkle-free arrangement of the pouch 6 can be achieved, see Figure 3(c).

Figure 4 shows the bottom part 5 of a cat lavatory of the invention in a top view with and without the side walls 2 spread apart. For reasons of clarity, the frame-like top part has been omitted here. The dashed line shown in Figure 4 shows the dimensions of the bottom part 5 when the peripheral edge is closed, i.e. the side walls 2 are not spread apart outwards, whereas the dotted line indicates the dimensions of the bottom part 5 when the peripheral edge or the side walls 2 are spread apart.

After the cat lavatory of the invention has been used, the frame-like top part 9 can simply be removed from the bottom part 5, the elastic mount then ensuring that the side walls 2 again return automatically to their original position, not spread apart. The pouch 6 can then be removed from the bottom part 5 and disposed of.

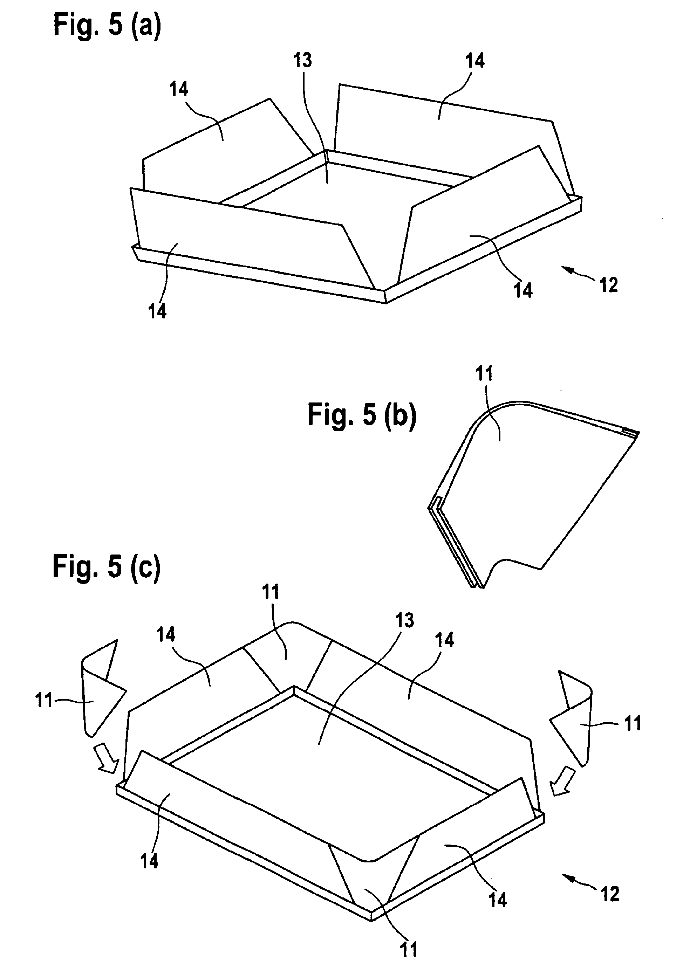

Figures 5(a) - 5(c) show a second embodiment of a bottom part 12 of a cat lavatory of the invention. This bottom part 12 likewise comprises a floor space 13 with side walls 14. As can be seen from Figure 5(a) in particular, the side walls 14 are preferably designed to be bevelled in their outer regions, so that open corner portions are formed for the bottom part 12. In these corner portions, elastic corner joints 11, preferably elastic rubber corners, as shown in Fig. 5(b), can be plugged onto mutually adjacent side walls 14 in such a way that the open corners are closed, as is shown in Figure 5(c). It can preferably be provided that the rubber corners 11 can be joined to the side walls 14 by means of a tongue-and-groove system. A person skilled in the art will, however, also be familiar with numerous other possible forms of connection. When, in the embodiment shown in Figure 5, a frame-like top part (not shown) is placed on top of the bottom part 12, the side walls 14 in this embodiment are also spread apart outwards because of the elastic rubber corners 11, and a pouch placed therein is stretched tight.

## Claims

1. A cat lavatory comprising:
(i) a bottom part (5, 12) with a substantially rectangular floor space (1, 13) and, on each longitudinal and lateral edge of the floor space (1, 13), a side wall (2, 14) projecting substantially upwardly in each case, wherein mutually adjacent side walls (2, 14) are joined together by means of an elastic mount (4, 11), a pouch (6), preferably containing cat litter (7), which can be placed in the bottom part (5, 12), while lateral edges (8) of the pouch (6) can be folded over the side walls (2, 14) of the bottom part (5, 12), and
(ii) a frame-like top part (9) which can be placed on top of the side walls (2, 14) of the bottom part (5, 12) and is designed such that, when placed on the side walls (2, 14) of the bottom part (5, 12), it expands them outwardly.

2. The cat lavatory as claimed in claim 1, **characterised in that** the elastic mount is an elastic band, preferably a rubber ring (4).

3. The cat lavatory as claimed in claim 1, **characterised in that** the elastic mount is an elastic corner joint, preferably a rubber corner (11).

4. The cat lavatory as claimed in any of the preceding claims, **characterised in that** the elastic mount (4, 11) is releasably secured to the side walls (2, 14), preferably hooked in, clipped in or plugged on.

5. the cat lavatory as claimed in any of the preceding claims, **characterised in that** the pouch (6) comprises cat litter (7) and a highly absorbent non-woven insert.

6. The cat lavatory as claimed in any of the preceding claims, **characterised in that** the frame-like top part (9) has an upper bevelled inside edge (10), so that, when it is placed on the bottom part, the side walls (2, 14) of the bottom part (5, 12) can be spread outwards along the slope.

7. The cat lavatory as claimed in any of the preceding claims, **characterised in that** the frame-like top part (9) has a circumferential outer edge which substantially completely hides the folded-out lateral edges (8) of the pouch (6) placed in the bottom part (5).

8. The cat lavatory as claimed in any of the preceding claims, **characterised in that** a splash guard frame, preferably comprising a roof-like covering, can be placed on top of the frame-like top part (9), preferably by being plugged to it.

## Patentansprüche

1. Katzentoilette, welche umfasst:
(i) ein Unterteil (5, 12) mit einer im wesentlichen rechteckigen Bodenfläche (1, 13) und jeweils einer an jedem Längs- und Querrand der Bodenfläche (1, 13) im wesentlichen nach oben abstehenden Seitenwand (2, 14),wobei aneinander angrenzende Seitenwände (2, 14) über eine elastische Halterung (4, 11) miteinander verbunden sind, einen Schlauchbeutel (6), der vorzugsweise Katzenstreu (7) enthält, der in das Unterteil (5, 12) einlegbar ist, während Seitenränder (8) des Schlauchbeutels (6) über die Seitenwände (2, 14) des Unterteils (5, 12) herausstülpbar sind, und
(ii) ein auf die Seitenwände (2, 14) des Unterteils (5, 12) aufsetzbares rahmenartiges Oberteil (9), das so ausgebildet ist, dass es beim Aufsetzen die Seitenwände (2, 14) des Unterteils (5, 12) nach außen spreizt.

2. Katzentoilette nach Anspruch 1, **dadurch gekennzeichnet, dass** die elastische Halterung ein elastisches Band, vorzugsweise ein Gummiring (4), ist.

3. Katzentoilette nach Anspruch 1, **dadurch gekennzeichnet, dass** die elastische Halterung eine elastische Eckverbindung, vorzugsweise eine Gummiecke (11) ist.

4. Katzentoilette nach einem der vorangehenden Ansprüche, **dadurch gekennzeichnet, dass** die elastische Halterung (4, 11) an den den Seitenwänden (2, 14) lösbar befestigt, vorzugsweise eingehakt, eingeschnappt oder aufgesteckt, ist.

5. Katzentoilette nach einem der vorangehenden Ansprüche, **dadurch gekennzeichnet, dass** der Schlauchbeutel (6) Katzenstreu (7) und eine hoch absorbierende Vlieseinlage umfasst.

6. Katzentoilette nach einem der vorangehenden Ansprüche, **dadurch gekennzeichnet, dass** das rahmenartige Oberteil (9) einen oberen abgeschrägten Innenrand (10) aufweist, so dass beim Aufsetzen desselben die Seitenwände (2, 14) des Unterteils (5, 12) entlang der Schräge nach außen spreizbar sind.

7. Katzentoilette nach einem der vorangehenden Ansprüche, **dadurch gekennzeichnet, dass** das rahmenartige Oberteil (9) einen umlaufenden Außenrand aufweist, der die herausgestülpten Seitenränder (8) des in das Unterteil (5) eingelegten Schlauchbeutels (6) im wesentlichen vollständig verdeckt.

8. Katzentoilette nach einem der vorangehenden Ansprüche, **dadurch gekennzeichnet, dass** auf das rahmenartige Oberteil (9) ein Spritzschutzrahmen, vorzugsweise umfassend eine Dachabdeckung, aufsetzbar, vorzugsweise aufsteckbar, ist.

## Revendications

1. Une toilette pour chat comprenant :
(i) une partie inférieure (5, 12) avec un espace formant plancher sensiblement rectangulaire (1, 13) et, sur chaque bord longitudinal et latéral de l'espace formant plancher (1, 13), une paroi latérale (2, 14) se projetant sensiblement vers le haut dans chaque cas, dans laquelle des parois latérales réciproquement adjacentes (2, 14) se rejoignent au moyen d'un support élastique (4, 11), un sac (6), de préférence contenant de la litière pour chat (7), qui peut être placé dans la partie inférieure (5, 12) tandis que des bords latéraux (8) du sac (6) peuvent être repliés sur les parois latérales (2, 14) de la partie inférieure (5, 12), et
(ii) une partie supérieure semblable à un cadre (9) qui peut être placée sur le haut des parois latérales (2, 14) de la partie inférieure (5, 12) et est conçu de sorte que, lorsqu'elle est placée sur les parois latérales (2, 14) de la partie inférieure (5, 12), elle les étend vers l'extérieur.

2. La toilette pour chat selon la revendication 1, **caractérisée en ce que** le support élastique est une bande élastique, de préférence un anneau en caoutchouc (4).

3. La toilette pour chat selon la revendication 1, **caractérisée en ce que** le support élastique est un joint d'angle élastique, de préférence une cornière en caoutchouc (11).

4. La toilette pour chat selon l'une quelconque des revendications précédentes, **caractérisée en ce que** le support élastique (4, 11) est fixé de manière amovible aux parois latérales (2, 14), de préférence accroché, clipsé ou enfiché dessus.

5. La toilette pour chat selon l'une quelconque des revendications précédentes, **caractérisée en ce que** le sac (6) comprend de la litière pour chat (7) et un insert non tissé hautement absorbant.

6. La toilette pour chat selon l'une quelconque des revendications précédentes, **caractérisée en ce que** la partie supérieure semblable à un cadre (9) a un bord intérieur biseauté supérieur (10), de sorte que, quand elle est placée sur la partie inférieure, les parois latérales (2, 14) de la partie inférieure (5, 12) peuvent s'étendre vers l'extérieur le long de la pente.

7. La toilette pour chat selon l'une quelconque des revendications précédentes, **caractérisée en ce que** la partie supérieure semblable à un cadre (9) a un bord extérieur circonférentiel qui cache sensiblement totalement les bords latéraux repliés (8) du sac (6) placé dans la partie inférieure (5).

8. La toilette pour chat selon l'une quelconque des revendications précédentes, **caractérisée en ce qu'**un cadre anti-éclaboussures, comprenant de préférence une couverture semblable à un toit, peut être placé sur le haut de la partie supérieure semblable à un cadre (9), de préférence en étant monté par enfichage sur celle-ci.
